# EUROPÄISCHE PATENTSCHRIFT

(11) **EP 4 713 917 B1**
(45) Veröffentlichungstag und Bekanntmachung des Hinweises auf die Patenterteilung: **22.07.2026**
(21) Anmeldenummer: 24768260.2
(22) Anmeldetag: 05.09.2024
(51) Int. Cl.: G06V 40/16, G06V 40/20, G10L 25/48, G10L 25/57, G06V 20/59, B60W 50/14

(54) **VERFAHREN ZUR STEUERUNG EINER FAHRZEUGFUNKTION**
METHOD FOR CONTROLLING A VEHICLE FUNCTION
PROCÉDÉ DE COMMANDE D'UNE FONCTION DU VÉHICULE

(30) Priorität: 09.09.2023 DE 102023003673
(43) Veröffentlichungstag der Anmeldung: 25.03.2026
(73) Patentinhaber: Mercedes-Benz Group AG, 70372 Stuttgart (DE)
(72) Erfinder: HANUSCHKIN, Alexander, 76133 Karlsruhe (DE)
(74) Vertreter: Novagraaf Group
(86) Internationale Anmeldenummer: PCT/EP2024/074896
(87) Internationale Veröffentlichungsnummer: WO 2025/051897

(56) Entgegenhaltungen:
- WO-A1-2021/244826
- DE-A1- 102013 222 645
- US-A1- 2020 083 856
- BISWAS ASTIK ET AL: "Multiple cameras audio visual speech recognition using active appearance model visual features in car environment", INTERNATIONAL JOURNAL OF SPEECH TECHNOLOGY, KLUWER, DORDRECHT, NL, vol. 19, no. 1, 23 January 2016 (2016-01-23), pages 159 - 171, XP035617373, ISSN: 1381-2416, [retrieved on 20160123], DOI: 10.1007/S10772-016-9332-X

## Beschreibung

Die Erfindung betrifft ein Verfahren zur Steuerung einer Fahrzeugfunktion nach der im Oberbegriff von Anspruch 1 näher definierten Art.

Über das fahrzeugintegrierte Infotainmentsystem können Medieninhalte wie Hörbücher, Podcasts, Lieder, Serien oder Filme wiedergeben werden. Als Audioquelle für ein Lied kann beispielsweise ein Radioempfänger, ein optischer Datenträger wie eine CD, ein Flashspeicher wie ein USB-Stick, ein per Bluetooth gekoppeltes Smartphone oder auch ein Internetstream genutzt werden. Das Abspielen von Liedern im Fahrzeug kann die Fahrzeuginsassen zum Mitsingen anregen. Das Mitsingen kann den Fahrzeuginsassen, insbesondere als Gruppe, Freude bereiten. Das Mitsingen eines Fahrzeuginsassen kann jedoch auch für weitere Fahrzeuginsassen störend sein. Insbesondere kann die fahrzeugführende Person hierdurch vom Fahrgeschehen abgelenkt werden, was die Sicherheit im Straßenverkehr verschlechtert. Es ist daher wünschenswert Verfahren und Mittel bereitzustellen, die eine angemessene Reaktion auf eine Situation erlauben, in der ein Fahrzeuginsasse während der Fahrt singt.

Aus der DE 10 2013 222 645 A1 ist ein Erkennungssystem in einem Fahrzeug zur Erfassung der Sprachaktivität eines Fahrzeuginsassen bekannt. Das Erkennungssystem ist dazu in der Lage, kamerabasiert Lippenbewegungen eines Fahrzeuginsassen beim Sprechen zu detektieren. Stellt das Erkennungssystem eine erhöhte Sprachaktivität im Fahrzeuginnenraum fest, so kann dies als Reduktion der Aufmerksamkeit der fahrzeugführenden Person interpretiert werden. Um die fahrzeugführende Person dazu zu bewegen ihre Aufmerksamkeit wieder vermehrt dem Fahrgeschehen zu widmen, können Signale im Fahrzeug ausgegeben werden. Zum Validieren, ob im Fahrzeuginnenraum tatsächlich gesprochen wird, kann zudem der Fahrzeuginnenraum ergänzend mit Hilfe wenigstens eines Mikrofons überwacht werden.

Das Erfassen der Lippenbewegungen von Personen mit Hilfe von Kameras im Zusammenhang mit der Nutzung eines persönlichen Assistenten ist beispielsweise aus der US 2018/0268812 A1 bekannt. Ein Sprachassistent kann beispielsweise auf einem Smartphone ausgeführt werden und das Erzeugen eines Terminkalendereintrags, das Abfragen des Wetterberichts, das Initiieren eines Anrufs oder dergleichen per Spracheingabe bewirken. Erfolgt eine entsprechende Spracheingabe bei einer hohen Lärmkulisse, so kann der Sprachassistent einen zugrunde liegenden Sprachbefehl teilweise oder auch vollständig überhören. Zudem können einzelne Wörter auch falsch verstanden werden. Die Druckschrift beschreibt das Erfassen der Gesichtspartie eines entsprechenden Nutzers mit Hilfe einer Kamera zur Detektion von Lippenbewegungen. Es werden dann nur diejenigen Momente einer Spracheingabe zur Analyse eines zugrunde liegenden Sprachbefehls berücksichtigt, bei denen gleichzeitig Lippenbewegungen seitens des Nutzers detektiert werden. Entsprechende Kamerabilder können dabei mit Hilfe von künstlicher Intelligenz ausgewertet werden. Es können nicht nur Lippenbewegungen an sich erkannt werden, sondern auch noch Lippen gelesen werden, also die vom Nutzer gesprochenen Worte aus charakteristischen Lippenbewegungsmustern abgeleitet werden.

Ferner offenbart die EP 4 163 913 A1 ein fahrzeugintegriertes Verfahren zum Ausüben von Kontrolle per Sprachbefehl. Die Druckschrift beschreibt einen fahrzeugintegrierten Sprachassistenten, der durch mehrere Fahrzeuginsassen gleichermaßen bedient werden kann. Für einige Fahrzeugfunktionen kann es dabei relevant sein zu ermitteln, welcher Fahrzeuginsasse einen jeweiligen Sprachbefehl erteilt, beispielsweise zum Ändern einer Lautstärke eines sitzplatzspezifischen Lautsprechers, dem Einstellen einer sitzplatzspezifischen Klimatisierungseinrichtung oder aber zum Verhindern, dass ein im Fahrzeug transportiertes Kind einen Steuerungsbefehl an ein autonom gesteuertes Fahrzeug richtet. Hierzu wird der Fahrzeuginnenraum mit Hilfe von Kameras überwacht und derjenige Fahrzeuginsasse als der Initiator eines Sprachbefehls ermittelt, der während dem Aufzeichnen der Spracheingabe seine Lippen bewegt.

Zudem offenbart die US 2012/01310196 A1 das Erkennen von Emotionen eines Nutzers anhand von Gesichts-, Sprach- oder Physiosignalen sowie eine entsprechende Sensorik zu deren Detektion.

Ferner offenbart die DE 10 2018 214 976 A1 ein Verfahren zur Steuerung einer Multimedia-Einrichtung sowie ein Computerprogramm und eine Einrichtung dazu. Über die Multimedia-Einrichtung wird in einem Fahrzeug ein Multimedia-Stück ausgegeben und eine Reaktion eines Fahrzeuginsassen darauf sensorisch erfasst. Beispielsweise kann akustisch mit Hilfe von Mikrofonen oder auch kamerabasiert durch das Detektieren entsprechender Lippenbewegungen das Mitsingen sowie Mittanzen des Fahrzeuginsassen zu Musik erkannt werden. Dies dient zur Steuerung zeitlich nachfolgender Ausgaben von Multimedia-Stücken.

Zudem offenbart die DE 10 2016 204 183 A1 ein Verfahren zur Musikauswahl mittels Gesten- und Sprachsteuerung. Dabei führt ein Benutzer eine Benutzeraktivität aus, welche aufgenommen, analysiert und mit einem in einer Datenbank vorgehaltenen Musiktitel verknüpft wird. Wird erneut die respektive Benutzeraktivität erkannt, so wird das der Benutzeraktivität zugeordnete Musikstück aus der Datenbank wiedergegeben. Die Benutzeraktivität kann beispielsweise durch Singen ausgebildet sein.

DE 10 2013 222 645 A1 offenbart ein Verfahren zur Ermittlung eine Sprechaktivität eines oder mehrerer Insassen eines Fahrzeuges, um entsprechend eine Fahrzeugfunktion wie z.B. die Ausgabe von akustischen, optischen oder haptischen Warnsignalen, oder ein Fahrerassistenzsystem auszulösen.

US 2020/083856 A1 offenbart eine automatisierte Lautstärkeregelung einer Musikausgabe, in Abhängigkeit von Umgebungsgeräuschen und/ oder einer Sprechaktivität von Insassen im Fahrzeug.

WO 2021/244826 A1 offenbart eine automatische Multimedia-Lautstärkeregelung in einer Fahrzeugkabine mittels Analyse von Kabinengeräusche, Stimmenanzahl, sowie unteranderem einer Detektion von Mitsingen.

BISWAS ASTIK ET AL: "Multiple cameras audio visual speech recognition using active appearance model visual features in car environment", offenbart eine audiovisuelle Spracherkennung in einer Fahrzeugumgebung, wobei sowohl Mikrotonsignale, als auch Kamerasignale verwendet werden, um die Sprache eines Fahrgastes in einem Fahrzeug zu erfassen und zu erkennen.

Der vorliegenden Erfindung liegt die Aufgabe zugrunde ein verbessertes Verfahren zur Steuerung einer Fahrzeugfunktion anzugeben, welches die Nutzerinteraktion für Fahrzeuginsassen mit dem Fahrzeug verbessert.

Erfindungsgemäß wird diese Aufgabe durch ein Verfahren zur Steuerung einer Fahrzeugfunktion mit den Merkmalen des Anspruchs 1 gelöst. Vorteilhafte Ausgestaltungen und Weiterbildungen ergeben sich aus den hiervon abhängigen Ansprüchen.

Ein gattungsgemäßes Verfahren zur Steuerung einer Fahrzeugfunktion, wobei mittels wenigstens eines Mikrofons Geräusche im Fahrzeuginnenraum erfasst werden und/oder mittels wenigstens einer Kamera zumindest das Gesicht wenigstens eines Fahrzeuginsassen erfasst wird, wobei die Recheneinheit von der Kamera erzeugte Kamerabilder auf von einem Fahrzeuginsassen vollführte Lippenbewegungen hin untersucht, wobei eine fahrzeuginterne Recheneinheit von dem Mikrofon und/oder der Kamera generierte Sensordaten verarbeitet, um die Fahrzeugfunktion in Abhängigkeit von aus der Verarbeitung der Sensordaten gewonnener Informationen anzusteuern, sieht vor, dass die Recheneinheit vom Mikrofon generierte Akustiksignale auf Gesang wenigstens eines Fahrzeuginsassen hin untersucht und/oder erkannte Lippenbewegungen mit bekannten Lippenbewegungsmustern abgleicht, die beim Singen entstehen, und die Recheneinheit die Fahrzeugfunktion ansteuert, wenn die Recheneinheit das Singen wenigstens eines Fahrzeuginsassen detektiert. Es ist ferner vorgesehen, dass die Recheneinheit Musikmerkmale und Gesangmerkmale erhebt, miteinander abgleicht und bei Übereinkunft wenigstens eines Merkmals das Mitsingen eines Fahrzeuginsassen zu Musik bestimmt, wobei die Musik- und Gesangmerkmale den Liedtext, den semantischen Inhalt eines Lieds und/oder die Harmonie, Melodie und/oder Rhythmus des Lieds umfassen, und wobei die Recheneinheit die Musikmerkmale aus den Akustiksignalen und/oder durch eine Analyse eines im Fahrzeug wiedergegebenen Medieninhalts und die Gesangmerkmale aus den Akustiksignalen und/oder dem Abgleich der erkannten Lippenbewegungen mit den Lippenbewegungsmustern ermittelt, wobei erfindungsgemäß die Recheneinheit Musikmerkmale bestimmt, welche das Singen durch einen Fahrzeuginsassen auslösen oder das Singen durch einen Fahrzeuginsassen unterbinden und diese in Form von Gesangauslösemerkmalen und Gesangunterbindungsmerkmalen in einer Triggerdatenbank auf der Recheneinheit und/oder einer fahrzeugexternen Recheneinrichtung speichert.

Das erfindungsgemäße Verfahren erlaubt es automatisiert Fahrzeugfunktionen in Abhängigkeit des Erkennens von menschlichem Gesang im Fahrzeuginnenraum anzusteuern. So gibt es die unterschiedlichsten Situationen, in denen Gesang im Fahrzeug sowohl positiv, als auch negativ bewertet werden kann.

Beispielsweise kann es als negativ bewertet werden, wenn ein Fahrzeuginsasse während der Fahrt singt, da hierdurch die fahrzeugführende Person abgelenkt werden kann. Erkennt die Recheneinheit, dass zumindest ein Fahrzeuginsasse, insbesondere die fahrzeugführende Person selbst, während dem Durchführen einer Fahraufgabe singt, so kann entsprechend die Recheneinheit Maßnahmen einleiten, um den Fahrzeuginsassen dazu zu bewegen, mit dem Singen aufzuhören.

Singt bspw. die fahrzeugführende Person aus eigenem Antrieb, so kann ein visueller und/oder akustischer Warnhinweis im Fahrzeug ertönen, um die fahrzeugführende Person aufzufordern das Singen zu unterlassen. Auch könnte über das Infotainmentsystem des Fahrzeugs ein Medieninhalt wie ein Lied abgespielt werden. Die fahrzeugführende Person könnte dann zu dem Lied mitsingen. Detektiert die Recheneinheit das Mitsingen, so kann die Recheneinheit das Infotainmentsystem ansteuern und das Lied pausieren oder stoppen. Es könnte auch Musik von außerhalb des Fahrzeugs in den Fahrzeuginnenraum vordringen, insbesondere bei geöffneten Fenstern. Wird in einer solchen Fahrsituation das Mitsingen durch die fahrzeugführende Person von der Recheneinheit detektiert, so kann die Recheneinheit einen elektrischen Fensterheber ansteuern, um ein offenes Fahrzeugfenster zu schließen und hierdurch das Vordringen der Musik in den Fahrzeuginnenraum zu stoppen. Bei einem vergleichsweise schlecht schallisolierten Fahrzeug kann Musik auch bei geschlossenen Fenstern in den Fahrzeuginnenraum vordringen, sodass hier die Recheneinheit das Infotainmentsystem des Fahrzeugs ansteuern kann, um ein die Musik neutralisierendes Geräuschmuster, auch als Active-Noise-Cancelling bezeichnet (ANC) abzuspielen oder die Musik durch ein sonstiges Geräusch zu übertönen.

Das Detektieren von Gesang in Fahrzeuginnenraum ist auf unterschiedliche Art und Weise möglich. So kann die Recheneinheit hierzu alleinig die Mittels des Mikrofons generierten Akustiksignale auswerten, alleinig die Kamerabilder zur Detektion von Lippenbewegungen analysieren oder aber auch beide Sensormodalitäten miteinander fusionieren. Bevorzugt wertet die Recheneinheit hierzu die Akustiksignale mehrerer an unterschiedlichen Positionen im Fahrzeuginnenraum verteilt angeordneten Mikrofonen aus. Dies ermöglicht zudem unter Berücksichtigung einer Laufzeitdifferenz eines entsprechenden Schallsignals und/oder einem Lautstärkeunterschied eine Schallquelle im Fahrzeuginnenraum zu verorten. So kann, wie auch unter Analyse welcher Fahrzeuginsasse seine Lippen bewegt, auch ermittelt werden welche der Fahrzeuginsassen singt. Soll das Mitsingen im Fahrzeuginnenraum detektiert werden, so kann insbesondere das über das Infotainmentsystem des Fahrzeugs wiederzugebende Audiosignal analysiert werden und aus dem vom Mikrofon generierten Akustiksignal abgezogen werden. Somit werden Störgeräusche aus dem Akustiksignal entfernt, sodass die Recheneinheit die Stimme eines Fahrzeuginsassen deutlicher hören kann. Die Recheneinheit analysiert daraufhin das Akustiksignal und erkennt Gesang dadurch, dass im Akustiksignal Gesang entsprechende Signalanteile vorhanden sind, wie bestimmte Tonhöhen und deren zeitlicher Verlauf. Zudem kann eine Sprachanalyse durchgeführt werden, sodass die von dem Fahrzeuginsassen gesungenen Worte festgestellt werden können. Diese Worte können dann mit bekannten Liedtexten abgeglichen werden, um das Singen eines bestimmten Liedes zu detektieren.

Mit Hilfe einer oder mehrerer den Fahrzeuginnenraum erfassender Kameras, lassen sich die Gesichter der Fahrzeuginsassen erfassen. Dies ermöglicht es Lippenbewegungen zu detektieren. Diese Lippenbewegungen werden von der Recheneinheit mit bekannten Lippenbewegungsmustern abgeglichen. Beim Singen entstehende typische Lippenbewegungsmuster können in einer Datenbank eines Datenspeichers der Recheneinheit vorgehalten werden. Dies ermöglicht das Lippenlesen, sodass rein durch eine visuelle Erfassung der Fahrzeuginsassen entsprechend gesungene Worte identifiziert werden können, was das Feststellen entsprechender Liedtexte ermöglicht. Anhand charakteristischer Lippenbewegungsmuster lässt sich zudem analog zur akustischen Überwachung des Fahrzeuginnenraums, das Singen mit bestimmten Tonhöhen, Rhythmen und dergleichen feststellen. So kann das Singen eines bestimmten Liedes nicht nur anhand des Liedtextes, sondern auch anhand der Melodie und dergleichen durch die Recheneinheit erkannt werden.

Es kann auch Situationen geben, in denen das Singen im Fahrzeuginnenraum als positiv bewertet werden kann. Dies ist beispielsweise der Fall, wenn ein Fahrzeuginsasse gut gelaunt ist und gerne ein bestimmtes Lied hören möchte. So kann der jeweilige Fahrzeuginsasse das Lied von sich aus Singen, was von der Recheneinheit entsprechend erkannt wird, woraufhin die Recheneinheit das Infotainmentsystem des Fahrzeugs ansteuert, um das gerade gesungene Lied wiederzugeben. Wird im Fahrzeug selbst kein Speichermedium mitgeführt, auf dem das entsprechende Lied gespeichert ist, so könnte hierzu auch ein Streamingdienstleister genutzt werden und das Lied über das Internet bezogen werden.

Wie bereits beschrieben, ist es dabei vorgesehen, dass die Recheneinheit Musikmerkmale und Gesangmerkmale erhebt, miteinander abgleicht und bei Übereinkunft wenigstens eines Merkmals das Mitsingen eines Fahrzeuginsassen zur Musik bestimmt, wobei die Musik- und Gesangmerkmale den Liedtext, den semantischen Inhalt eines Lieds und/oder die Harmonie, Melodie und/oder Rhythmus des Lieds umfassen, und wobei die Recheneinheit die Musikmerkmale aus den Akustiksignalen und/oder durch eine Analyse eines im Fahrzeug wiedergegebenen Medieninhalts und die Gesangmerkmale aus den Akustiksignalen und/oder dem Abgleich der erkannten Lippenbewegungen mit den Lippenbewegungsmustern ermittelt. Durch das Erheben der Musikmerkmale und Gesangmerkmale und deren Abgleich ist die Recheneinheit dazu in der Lage Mitsingen auf besonders zuverlässiger Art und Weise zu detektieren. Mit anderen Worten vergleicht die Recheneinheit die im Fahrzeug wiedergegebene Musik mit dem im Fahrzeug detektierten Gesang.

Wie bereits im vorigen erwähnt, können Lieder sowohl anhand ihres Liedtextes, des semantischen Inhalts des Liedtextes aber auch anhand der Musik an sich, also der Harmonie, Melodie und des Rhythmus eindeutig identifiziert werden.

So stellen die Harmonie, Melodie und der Rhythmus drei grundlegende Ordnungssysteme zur Klassifizierung von Musik dar. Dabei beschreibt die Harmonie das Gefüge von Tonhöhen, also das gleichzeitige Erklingen mehrerer Einzelklänge. Die Melodie beschreibt die zeitliche Anordnung bzw. Abfolge von Tönen. Der Rhythmus gibt die Dynamik von Musik an und lässt sich wiederum in Takt, Metrum und Tempo unterteilen.

All diese Merkmale kann die Recheneinheit sowohl für die im Fahrzeug wiedergegebene Musik, als auch für den erfassten Gesang feststellen. Eine besonders zuverlässige Analyse des Lieds ist durch die Analyse des im Fahrzeug wiedergegebenen Medieninhalts möglich. So kann die Recheneinheit beispielsweise eine entsprechende MP3-Datei einlesen und die darin enthaltenen Informationen auswerten. Entsprechend könnte ein Live in das Fahrzeug gestreamtes Lied von der Recheneinheit verarbeitet werden. Auch können die über die Lautsprecher des Fahrzeugs wiedergegebenen akustischen Signale durch die Recheneinheit analysiert werden. So können entsprechende Lautsprechereingangssignale von der Recheneinheit analysiert werden, oder aber die entsprechenden Geräusche im Fahrzeuginnenraum mittels dem oder den Mikrofonen erfasst werden und die entsprechenden mittels der Mikrofone generierten Akustiksignale ausgewertet werden. Die entsprechenden Gesangmerkmale lassen sich zudem durch den Abgleich der erkannten Lippenbewegungen mit den Lippenbewegungsmustern erheben. Besonders bevorzugt können die einzelnen Analysearten miteinander kombiniert werden, um die jeweiligen Musikmerkmale und Gesangmerkmale auf besonders zuverlässige Art und Weise zu bestimmen.

Um das Mitsingen festzustellen, müssen wenigstens ein Musikmerkmal und wenigstens ein Gesangmerkmal für ein bestimmtes Lied, insbesondere zeitlich, miteinander übereinstimmen. Je mehr Merkmale über die Dauer des wiedergegebenen Lieds übereinstimmen, desto wahrscheinlicher ist es auch, dass der Fahrzeuginsasse genau dieses Lied mitsingt. Es kann beispielsweise vorkommen, dass ein Fahrzeuginsasse schief singt, er also die jeweiligen Töne nicht trifft. Es können für ein und dieselbe Partie eines Liedes gleichzeitig unterschiedliche Musikmerkmale und Gesangmerkmale miteinander verglichen werden. So kann für die gleiche Liedstelle beispielsweise eine Abweichung in der Harmonie vorliegen, jedoch der semantische Inhalt gleich sein. Somit kann die Recheneinheit auch eine Übereinkunft zwischen Liedern und Gesang feststellen, sollte der Fahrzeuginsasse schief singen. Andersherum könnte auch der Fahrzeuginsasse den Liedtext nicht kennen und stattdessen einfach nur Mitsummen oder Platzhalterworte benutzen wie "lalala". Trifft dabei der Fahrzeuginsasse die Töne, so kann dennoch eine Übereinstimmung zwischen dem im Fahrzeuginnenraum wiedergegebene Lied und dem Gesang durch die Recheneinheit festgestellt werden.

Wie bereits beschrieben, bestimmt die Recheneinheit Musikmerkmale, welche das Singen durch einen Fahrzeuginsassen auslösen oder das Singen durch einen Fahrzeuginsassen unterbinden und speichert diese in Form von Gesangauslösemerkmalen und Gesangunterbindungsmerkmalen in einer Triggerdatenbank auf der Recheneinheit und/oder einer fahrzeugexternen Recheneinrichtung. Somit können für die unterschiedlichsten Nutzer bzw. Fahrzeuginsassen ganze Lieder oder auch nur Liedpartien bestimmt werden, die den jeweiligen Fahrzeuginsassen explizit zum Mitsingen anregen oder aber von dem Singen abhalten.

Am einfachsten lassen sich Gesangauslösemerkmale dadurch auffinden, dass eine jeweilige Liedstelle, zu der ein Fahrzeuginsasse mit dem Singen beginnt, markiert wird. Entsprechend lassen sich Liedstellen, an denen der Fahrzeuginsasse das Singen pausiert oder gar nicht erst beginnt, mit Gesangunterbindungsmerkmalen verknüpfen. Darüber hinaus kann ebenfalls künstliche Intelligenz eingesetzt werden, um die Musikmerkmale zu analysieren und daraus entsprechende Gesangauslösemerkmale bzw. Gesangunterbindungsmerkmale herauszufiltern. So können beispielsweise ganz bestimmte Textpassagen, Harmonien, Melodien oder Rhythmen einen Fahrzeuginsassen zum Singen anregen oder davon abhalten.

Eine jeweilige Triggerdatenbank kann sowohl auf einer fahrzeuginternen Recheneinheit, als auch der fahrzeugexternen Recheneinrichtung vorgehalten werden. Es ist dabei auch denkbar, dass jeweilige Triggerdatenbanken in den Recheneinheiten von Fahrzeugen aktualisiert und erweitert werden, und entsprechend neu gewonnene Informationen in der fahrzeugexternen Recheneinrichtung aggregiert werden. Von der Recheneinrichtung können dann entsprechend aggregierte Informationen an die einzelnen Recheneinheiten in den Fahrzeugen der Fahrzeugflotte verteilt werden, um die in einem bestimmten Fahrzeug gewonnenen Informationen auch in einem anderen Fahrzeug nutzen zu können.

Die Trigger können dabei personenspezifisch sein, sodass für verschiedene Personen individuelle Trigger vorgehalten werden. Individuen können dabei auf bekannte Art und Weise eindeutig identifiziert werden, beispielsweise mittels Gesichtserkennung basierend auf mit Innenraumkameras erzeugten Kamerabildern, insbesondere unter Einsatz des maschinellen Sehens, mittels personalisierter Fahrzeugschlüssel, und/oder anhand eines persönlichen PIN-Codes und dergleichen.

Entsprechend einer vorteilhaften Ausgestaltung des erfindungsgemäßen Verfahrens, setzt die Recheneinheit künstliche Intelligenz zur Detektion von Gesang ein. Hierzu können alle gängigen KI-Methoden eingesetzt werden, insbesondere Methoden des maschinellen Lernens, besonders bevorzugt unter Verwendung künstlicher neuronaler Netze. Dies ermöglicht es der Recheneinheit Gesang noch zuverlässiger zu detektieren. Die entsprechenden Maschinenlernmodelle können dabei vom Fahrzeughersteller vor einer Implementierung bzw. dem Aufspielen auf die jeweilige Recheneinheit trainiert worden sein. Hierzu können entsprechende Messkampagnen durchgeführt worden sein. Beispielsweise können Probanden eine festgelegte Gesamtmenge unterschiedlicher Lieder mitsingen, sodass charakteristische Lippenbewegungsmuster für die jeweiligen Lieder ermittelt werden können. Ein jeweiliges Maschinenlernmodell kann dabei soweit trainiert werden, dass nicht nur Lieder an sich, sondern einzelne Harmonien, Melodien und/oder Rhythmen entsprechenden Lippenbewegungsmustern zugeordnet werden können, welche sich dann auf andere Lieder übertragen lassen.

Eine weitere vorteilhafte Ausgestaltung des erfindungsgemäßen Verfahrens sieht dabei ferner vor, dass die Recheneinheit die Kamerabilder und/oder von einem den Fahrzeuginnenraum erfassenden Sensor zur Erzeugung von Tiefeninformationen generierte Sensordaten zur Detektion von für Tanzen charakteristische Bewegungsmuster zumindest eines Fahrzeuginsassen hin untersucht und feststellt, dass gerade im Fahrzeuginnenraum gesungen wird, solange die Recheneinheit tanzende Bewegungen im Fahrzeuginnenraum erkennt. Häufig singen Fahrzeuginsassen nicht nur, sondern Tanzen dabei gleichzeitig auch noch. Da typischerweise die Fahrzeuginsassen im Fahrzeuginnenraum auf einem jeweiligen Fahrzeugsitz sitzen, bevorzugt angeschnallt, meint "Tanzen" in diesem Zusammenhang ein rhythmisches Hin- und Herbewegen einzelner Körperpartien. So kann beispielsweise bereits ein Kopfnicken, Fingerschnippen, Headbangen, seitliches Hin- und Herschaukeln und dergleichen bereits als Tanzen interpretiert werden. Das Detektieren von Tanzen stellt somit einen weiteren Indikator zum Feststellen von Gesang im Fahrzeuginnenraum dar. Somit kann die Recheneinheit noch zuverlässiger Gesang im Fahrzeuginnenraum detektieren.

Hierzu können Gliedmaße und Körperpartien von Fahrzeuginsassen anhand visueller Merkmale bestimmt und deren Bewegungen in Kamerabildern nachverfolgt werden. Das Fahrzeug kann auch über den Fahrzeuginnenraum erfassende Bewegungssensoren, wie Radarsensoren, Laserscanner, Funksensoren und dergleichen verfügen, welche das Generieren von Tiefeninformationen erlauben. Durch das zeitliche Nachverfolgen von gemessenen Objektabständen können so Bewegungen erfasst werden.

Es können dabei Methoden des computergestützen Sehens, auch als "computer vision" bezeichnet, eingesetzt werden, um die Körperhaltung bzw. eine Körperhaltungsänderung der Fahrzeuginsassen zu erkennen. Dies kann beispielsweise unterstützt werden durch den Einsatz von tiefen neuronalen Netzen zur "pose-estimation". Zudem können für das Tanzen charakteristische Bewegungsmuster auch mit Hilfe von Drucksensoren im Fahrzeug, beispielsweise integriert in die Fahrzeugsitze, erkannt werden.

Entsprechend einer weiteren vorteilhaften Ausgestaltung des erfindungsgemäßen Verfahrens, überträgt die Recheneinheit übereinstimmende Paare aus Musikmerkmalen und Gesangmerkmalen an eine fahrzeugexterne Recheneinrichtung, aggregiert die Recheneinrichtung die von einer Vielzahl von unterschiedlichen Recheneinheiten bezogenen Paare in einer Übereinstimmungsdatenbank, gruppiert die Recheneinrichtung unter Verarbeitung der in der Übereinstimmungsdatenbank aggregierten Paare die einem bestimmten Musikmerkmal zugeordneten Lippenbewegungen und stellt diese zum Abrufen durch die Recheneinheiten bereit, wobei eine jeweilige Gruppierung von einer Recheneinheit zum Auffinden einer Übereinkunft zwischen Musikmerkmalen und Gesangmerkmalen einsetzbar ist. Bei der fahrzeugexternen Recheneinrichtung kann es sich beispielsweise um einen Cloudserver handeln. Der Cloudserver kann beispielsweise vom Fahrzeughersteller betrieben werden. Die Recheneinheiten der Fahrzeuge einer Fahrzeugflotte können somit das jeweilige Nutzerverhalten eines besonders großen Personenkreises erfassen und zur zentralen Analyse an die Recheneinrichtung übermitteln. Dies ermöglicht es charakteristische Lippenbewegungsmuster sowohl für einzelne Musikmerkmale, als auch für einzelne Liedpartien oder auch vollständige Lieder zu ermitteln. So lässt sich feststellen, dass Personen beim Singen gleicher Liedpartien ähnliche Lippenbewegungen durchführen. Werden dann diese charakteristischen Lippenbewegungsmuster erneut in einem Fahrzeug detektiert, so ist dies ein zuverlässiges Indiz dafür, dass die entsprechenden Liedpartien gesungen werden. Dies ermöglicht es das Mitsingen von Liedern basierend auf der Analyse von Lippenbewegungen noch zuverlässiger zu detektieren.

Die Kommunikation zwischen fahrzeugintegrierten Recheneinheiten und der fahrzeugexternen Recheneinrichtung kann auf bewährte Art und Weise erfolgen. So kann die Recheneinrichtung über das Internet erreicht werden. In den jeweiligen Fahrzeugen kann eine Telekommunikationseinheit verbaut sein, die eine Anbindung der Recheneinheit an das Internet per Mobilfunk, Wi-Fi oder dergleichen erlaubt.

Eine weitere vorteilhafte Ausgestaltung des erfindungsgemäßen Verfahrens sieht ferner vor, dass die fahrzeugexterne Recheneinrichtung einen Algorithmus des unüberwachten maschinellen Lernens zum Gruppieren von Lippenbewegungen einsetzt. Mit Hilfe des unüberwachten maschinellen Lernens lassen sich Muster besonders zuverlässig in Daten auffinden, sodass besonders treffende Gruppierungen an Lippenbewegungen ermittelt werden können. Beispielsweise kann hierzu der sogenannte k-means-Algorithmus eingesetzt werden, der sich aufgrund seiner hohen Zuverlässigkeit bei gleichzeitiger Einfachheit auszeichnet.

Eine weitere vorteilhafte Ausgestaltung des erfindungsgemäßen Verfahrens sieht ferner vor, dass die Recheneinheit, wenn sich wenigstens zwei Fahrzeuginsassen im Fahrzeug befinden, unter Verarbeitung von Sensordaten den Emotionszustand der Fahrzeuginsassen erfasst und den jeweiligen Emotionszustand in Relation setzt zu detektiertem oder ausbleibendem Gesang. Dies kann zur Bereitstellung weiterer Funktionen genutzt werden. Das Erfassen und Bewerten von Emotionen von Fahrzeuginsassen ist auf die unterschiedlichste Art und Weise möglich, beispielsweise wie in der US 2012/0130196 A1 beschrieben. So können im Fahrzeug Vitalsensoren verbaut sein oder auch von den Fahrzeuginsassen mitgeführte oder getragene Vitalsensoren, beispielsweise integriert in mobile Endgeräte wie ein Smartphone oder ein Wearable wie eine Smartwatch, genutzt werden, um Vitalparameter zu erfassen. Je nach zeitlichem Verlauf der Vitalparameter kann dann auf einen bestimmten Emotionszustand des Fahrzeuginsassen geschlossen werden. Insbesondere kann eine Änderung des Emotionszustands festgestellt werden, wenn beispielsweise die Pulsfrequenz des Nutzers, die Hautleitfähigkeit und/oder die Hauttemperatur zu- bzw. abnehmen.

Dabei wird ein Zusammenhang zwischen den Emotionen einer zweiten Person zum Gesang einer ersten Person hergestellt. So kann der Gesang der ersten Person positive oder negative Auswirkungen auf die Emotionen der zweiten Person haben. Einzelne Individuen lassen sich dabei wie bereits beschrieben eindeutig unterscheiden.

Auch kann mit Hilfe von Sprachanalyse der Inhalt von im Fahrzeuginnenraum geführten Gesprächen erfasst und analysiert werden. Hierdurch kann die Recheneinheit feststellen, ob sich Fahrzeuginsassen streiten oder zum weiteren Mitsingen anfeuern. Ein etwaiger Streit könnte beispielsweise entstehen, wenn ein erster Fahrzeuginsasse singen möchte, dies jedoch wenigstens einen weiteren Fahrzeuginsassen stört. Mit Hilfe der computergestützten Linguistik, auch als Natural Language Processing (NLP) bezeichnet, ist die Recheneinheit dazu in der Lage das "Singen" als Gesprächsthema zu identifizieren.

Auch kann das Einstimmen eines weiteren Fahrzeuginsassen in den Gesang als positive Emotion gewertet werden.

Eine weitere vorteilhafte Ausgestaltung des erfindungsgemäßen Verfahrens sieht dabei ferner vor, dass die Recheneinheit:
- beim Detektieren einer Verbesserung des Emotionszustands eines Fahrzeuginsassen zu Beginn des Gesangs und/oder beim Detektieren einer Verschlechterung des Emotionszustands des Fahrzeuginsassen am Ende des Gesangs, automatisch die Wiedergabe eines weiteren Lieds im Fahrzeug bewirkt, insbesondere eines Lieds, welches wenigstens ein Gesangauslösemerkmal umfasst; und/oder
- beim Detektieren einer Verschlechterung des Emotionszustands eines Fahrzeuginsassen zu Beginn des Gesangs und/oder beim Detektieren einer Verbesserung des Emotionszustands des Fahrzeuginsassen am Ende des Gesangs automatisch die Wiedergabe des aktuell im Fahrzeug abgespielten Lieds beendet oder die Wiedergabe eines Lieds im Fahrzeug bewirkt, welches wenigstens ein Gesangunterbindungsmerkmal umfasst.

Somit steuert die Recheneinheit die Wiedergabe von Medieninhalten, insbesondere Liedern, im Fahrzeuginnenraum in Abhängigkeit der jeweiligen Situation, um entweder die Freude der Fahrzeuginsassen weiter zu heben, oder aber eine Verschlechterung bzw. Ablenkung der fahrzeugführenden Person zu verhindern.

Fängt ein Fahrzeuginsasse zu Singen an und verbessern sich dabei die Emotionen weiterer Fahrzeuginsassen bzw. beendet ein Fahrzeuginsasse seinen Gesang, woraufhin der Emotionszustand weiterer Fahrzeuginsassen abnimmt, ist dies ein Indiz dafür, dass der Gesang im Fahrzeuginnenraum als positiv wahrgenommen wird. Um hier die positive Atmosphäre aufrecht zu erhalten, kann die Recheneinheit entsprechend weitere Lieder automatisch abspielen, damit die Fahrzeuginsassen weiter Mitsingen und erfreut sind. Insbesondere werden hierzu für die jeweiligen Fahrzeuginsassen relevante Gesangauslösemerkmale identifiziert und Lieder zur Wiedergabe ausgewählt, die genau diese Gesangauslösemerkmale umfassen. Es kann sich dann beispielsweise um solche Lieder handeln, die einen bestimmten Liedtext aufweisen, insbesondere mit einer bestimmten Thematik, oder aber die bestimmte Liedpassagen mit einer ganz bevorzugten Harmonie, Melodie und/oder Rhythmus aufweisen.

Handelt es sich hingegen um eine Situation, in der der Gesang im Fahrzeuginnenraum als negativ zu bewerten ist, was insbesondere dadurch durch die Recheneinheit festgestellt wird, dass zu Beginn des Gesangs im Fahrzeuginnenraum der Emotionszustand zumindest eines Fahrzeuginsassen sinkt und/oder der jeweilige Emotionszustand beim Ende des Gesangs steig, so kann die Recheneinheit das Abspielen von Liedern im Fahrzeuginnenraum über das fahrzeuginterne Infotainmentsystem unterbinden oder aber solche Lieder abspielen, bei denen mit hoher Wahrscheinlichkeit die Fahrzeuginsassen nicht mitsingen werden. Hierzu wählt die Recheneinheit solche Lieder aus, die für die jeweiligen Fahrzeuginsassen besonders viele Gesangunterbindungsmerkmale aufweisen. Somit wird Streit vermieden und die Sicherheit im Straßenverkehr durch das Reduzieren des Ablenkungsgrads der fahrzeugführenden Person verbessert.

Eine weitere vorteilhafte Ausgestaltung des erfindungsgemäßen Verfahrens sieht ferner vor, dass die Recheneinheit für ein im Fahrzeug wiederzugebendes Lied vor dessen Wiedergabe unter Zugriff auf die Triggerdatenbank die jeweils im Lied enthaltenen Gesangauslösemerkmale und Gesangunterbindungsmerkmale bestimmt. Generell können die jeweiligen Gesangauslösemerkmale und Gesangunterbindungsmerkmale für einzelne Liedpassagen bzw. vollständige Lieder zu einem beliebigen Zeitpunkt erhoben werden und gemeinsam mit dem jeweiligen Lied gespeichert werden, sodass die jeweiligen Merkmale jederzeit erneut abgerufen werden können. Es können jedoch auch Lieder im Fahrzeuginnenraum ausgegeben werden, für die noch keine Gesangauslösemerkmale und Gesangunterdrückungsmerkmale bestimmt wurden. Dies kann die Recheneinheit entsprechend bei der erstmaligen Wiedergabe eines entsprechenden Lieds im Fahrzeuginnenraum durchführen. Die entsprechend ermittelten Gesangauslösemerkmale und Gesangunterbindungsmerkmale können dann wie bereits erwähnt gespeichert werden, sodass sie nicht wieder erneut ermittelt werden müssen. Diese Aufgabe kann auch für zumindest einige Liedpassagen oder auch ganze Lieder von der fahrzeugexternen Recheneinrichtung übernommen werden. Entsprechende Gesangauslösemerkmale und Gesangunterbindungsmerkmale können dann entsprechend von der fahrzeugexternen Recheneinrichtung an die Recheneinheiten in den Fahrzeugen der Fahrzeugflotte vermittelt werden.

Aufgrund der unterschiedlichen Musikgeschmäcker von Personen, sind die Gesangauslösemerkmale und Gesangunterbindungsmerkmale von Person zu Person verschieden. Somit umfasst die Erfindung weiterhin das Erfassen jeweils typspezifischer bzw. personenspezifischer Gesangauslösemerkmale und Gesangunterbindungsmerkmale. Hierzu können die entsprechenden Merkmale mit einem Musikgeschmack bzw. einem Nutzertyp verknüpft werden. Auch können Fahrzeuginsassen eindeutig identifiziert werden, beispielsweise durch das Anmelden am Infotainmentsystem des Fahrzeugs mit einem eindeutigen Nutzernamen und Passwort, das Erkennen von biometrischen Merkmalen oder das Erkennen eines mitgeführten Identifikationsmerkmals, beispielsweise in Form der eindeutigen Bluetoothadresse oder MAC-Adresse eines mobilen Endgeräts. Die jeweils im vorigen beschriebenen erfindungsgemäßen Verfahrensschritte können dann speziell auf den jeweiligen Fahrzeuginsassen zugeschnitten durchgeführt werden.

In einer jeweiligen Triggerdatenbank können dann beispielsweise Liedtexte sowie Harmonien, Melodien und/oder Rhythmen identifiziert und entsprechend markiert werden, die beispielsweise von einer Person, die gerne Heavy Metal hört, als Gesangauslösemerkmal identifiziert werden, jedoch von einer Person die gerne Popmusik oder Schlager hört, als Gesangunterbindungsmerkmal identifiziert werden und umgekehrt.

Weitere vorteilhafte Ausgestaltungen des erfindungsgemäßen Verfahrens zur Steuerung einer Fahrzeugfunktion ergeben sich auch aus den Ausführungsbeispielen, welche nachfolgend unter Bezugnahme auf die Figuren näher beschrieben werden.

Dabei zeigen:
- Fig. 1: eine schematisierte Ansicht auf die Durchführung eines erfindungsgemäßen Verfahrens zur Steuerung einer Fahrzeugfunktion in einem Fahrzeug; und
- Fig. 2: eine schematische Darstellung der von einer fahrzeuginternen Recheneinheit erkannten Musik, des erkannten Gesangs und des erkannten Emotionszustands eines Fahrzeuginsassen im Fahrzeuginnenraum.

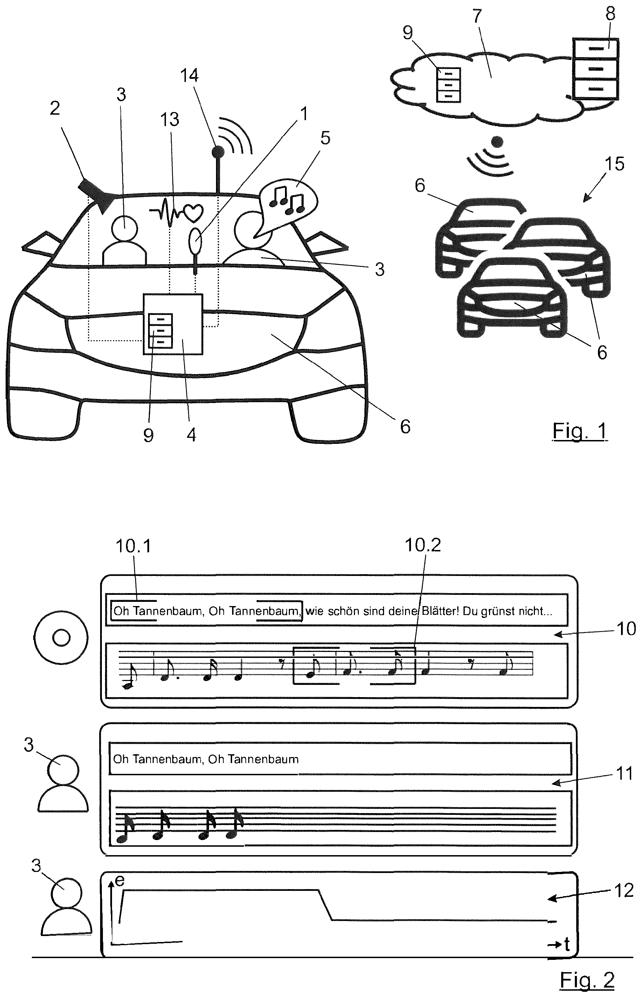

Das Singen in einem Fahrzeug während der Fahrt kann erheiternd sein oder auch störend oder gar gefährlich, aufgrund der Ablenkung der fahrzeugführenden Person. Mit Hilfe eines erfindungsgemäßen Verfahrens, lassen sich Fahrzeugfunktionen in Abhängigkeit des Detektierens von Gesang 5 im Fahrzeuginnenraum eines in Figur 1 gezeigten Fahrzeugs 6 automatisch ansteuern.

Hierzu umfasst das erfindungsgemäße Fahrzeug 6 wenigstens ein Mikrofon 1 zum Erfassen der Geräuschkulisse im Fahrzeuginnenraum sowie wenigstens eine auf die jeweiligen Gesichter wenigstens eines Fahrzeuginsassen 3 ausgerichtete Kamera 2. Von dem Mikrofon 1 und der Kamera 2 erzeugte Sensordaten werden dabei von einer fahrzeuginternen Recheneinheit 4 ausgewertet. Dabei ist die Recheneinheit 4 dazu in der Lage, in einem entsprechenden von dem oder den Mikrofonen 1 generierten Akustiksignal sowohl Musik, als auch Gesang 5 zu identifizieren. Zudem ist die Recheneinheit 4 ferner dazu in der Lage von der oder den Kameras 2 erzeugte Kamerabilder auszuwerten und hierdurch die Lippenbewegungen der Fahrzeuginsassen 3 zu erkennen. Diese Lippenbewegungen werden von der Recheneinheit 4 mit bekannten Lippenbewegungsmustern abgeglichen, um entsprechend Gesang 5 zu identifizieren. Dabei können jeweils nicht nur die jeweiligen Liedtexte und der semantische Inhalt der Liedtexte identifiziert werden, sondern auch für Musik charakteristische Merkmale, wie die Harmonie, die Melodie und/oder der Rhythmus.

Dabei identifiziert die Recheneinheit 4 in Figur 2 gezeigte Musikmerkmale 10 und Gesangmerkmale 11, gleicht diese miteinander ab und erkennt das Mitsingen zu einem im Fahrzeug 6 abgespielten Lied, wenn wenigstens ein Musikmerkmal 10 und wenigstens ein Gesangmerkmal 11 übereinstimmen. Zudem kann das Fahrzeug 6 über Vitalsensoren 13 verfügen, mit deren Hilfe die Recheneinheit 4 Vitalparameter der Fahrzeuginsassen 3 erheben kann. Unter Analyse dieser Vitalparameter ist die Recheneinheit 4 dazu in der Lage einen ebenfalls in Figur 2 gezeigten Emotionszustand 12 der jeweiligen Fahrzeuginsassen 3 zu ermitteln. Figur 2 zeigt dabei den Emotionszustand 12 in Form einer Emotion e über der Zeit t. Hierzu kann auch der semantische Inhalt eines Gesprächs innerhalb des Fahrzeugs 6 erfasst und ausgewertet werden, wodurch beispielsweise ein Streit oder eine Zustimmung zwischen den Fahrzeuginsassen 3 identifiziert werden kann. Auch das Einstimmen eines weiteren Fahrzeuginsassen 3 in den Gesang 5 eines ersten Fahrzeuginsassen 3 kann als positiver Emotionszustand 12 ausgelegt werden.

Ferner kann das Fahrzeug 6 Kommunikationsmittel 14, wie eine Telekommunikationseinheit, aufweisen, mit deren Hilfe das Fahrzeug 6 bzw. die Recheneinheit 4 eine drahtlose Kommunikationsverbindung zu einer fahrzeugexternen Recheneinrichtung 7 aufbauen kann. Auf der Recheneinrichtung 7 wird eine Übereinstimmungsdatenbank 8 zum Aggregieren von einer Vielzahl von unterschiedlichen Recheneinheiten 4 bezogenen Paaren aus Musikmerkmalen 10 und Gesangmerkmalen 11 vorgehalten. Die Recheneinrichtung 7 kann die in der Übereinstimmungsdatenbank 8 aggregierten Paare verarbeiten und somit die einem bestimmten Musikmerkmal 10 zugeordneten Lippenbewegungen gruppieren und zum Abrufen durch die jeweiligen Recheneinheiten 4 bereitstellen. Dies ist möglich, da die jeweiligen Gesangmerkmale 11 jeweils selbst Lippenbewegungen zugeordnet sind. Diese jeweiligen Gruppierungen können dann von den Recheneinheiten 4 zum Auffinden einer Übereinkunft zwischen Musikmerkmalen 10 und Gesangmerkmalen 11 unter Analyse der jeweiligen Lippenbewegungen bzw. Lippenbewegungsmustern eingesetzt werden.

Dies ermöglicht den Austausch von in den jeweiligen Fahrzeugen 6 einer Fahrzeugflotte 15 während der Nutzung neu entdeckten charakteristischen Lippenbewegungsmustern.

Dabei ermittelt die Recheneinheit 4 solche Musikmerkmale 10, die das Singen durch einen Fahrzeuginsassen 3 auslösen und speichert diese in Form von Gesangauslösemerkmalen 10.1 in einer Triggerdatenbank 9 auf der Recheneinheit 4 und/oder der fahrzeugexternen Recheneinrichtung 7. Des Weiteren bestimmt die Recheneinheit 4 Musikmerkmale 10, welche das Singen durch einen Fahrzeuginsassen 3 unterbinden. Diese Musikmerkmale 10 werden als Gesangunterbindungsmerkmal 10.2 ebenfalls in der Triggerdatenbank 9 gespeichert. Mit Hilfe der Gesangauslösemerkmale 10.1 und Gesangunterbindungsmerkale 10.2 lassen sich Lieder bzw. Liedpassagen identifizieren, die das Singen bei einem Fahrzeuginsassen 3 auslösen bzw. unterbinden. Die jeweiligen Gesangauslösemerkmale 10.1 und Gesangunterbindungsmerkmale 10.2 lassen sich dabei ferner einzelnen semantischen Inhalten von Liedern und/oder den musikalischen Eigenschaften wie Harmonie, Melodie und/oder Rhythmus zuordnen. Besonders bevorzugt werden für verschiedene Personentypen bzw. bevorzugte Musikrichtungen individuelle Gesangauslösemerkmale 10.1 und Gesangunterbindungsmerkmale 10.2 bestimmt.

Figur 2 verdeutlicht das Vorgehen hierzu. In Figur 2 im oberen Bereich gezeigt, sind die Musikmerkmale 10 bei der Wiedergabe eines Liedes im Fahrzeug 6, was durch eine links neben der entsprechenden Box dargestellte CD angedeutet ist. In einer oberen Zeile der Box ist dabei der Liedtext und in einer unteren Zeile die Noten gezeigt. In einer darunter liegenden Box sind die von der Recheneinheit 4 identifizierten Gesangmerkmale 11 gezeigt. Die Recheneinheit 4 vergleicht die Gesangmerkmale 11 mit den Musikmerkmalen 10 und ist dadurch dazu in der Lage festzustellen, ob der jeweilige Fahrzeuginsasse 3 mitsingt. Entsprechende Zeitfenster, an denen der jeweilige Fahrzeuginsasse 3 mitsingt, sind in Figur 2 dadurch angedeutet, dass entsprechende Liedtextteile bzw. Noten nur an bestimmten Abschnitten in den Gesangmerkmalen 11 dargestellt sind. So singt hier der Fahrzeuginsasse 3 nur die Partie "Oh Tannenbaum, Oh Tannenbaum" mit. Insbesondere wenn der jeweilige Fahrzeuginsasse 3 beginnt zu singen, teilt die Recheneinheit 4 den jeweiligen Musikmerkmalen 10 Gesangauslösemerkmale 10.1 zu. Bei dem in Figur 2 gezeigten Ausführungsbeispiel regt beispielsweise der Liedtext den Fahrzeuginsassen 3 zum Mitsingen an. Hört der jeweilige Fahrzeuginsasse 3 auf zu singen, so teilt bevorzugt die Recheneinheit 4 entsprechenden Musikmerkmalen 10 ein Gesangunterbindungsmerkmal 10.2 zu. Bei dem in Figur 2 gezeigten Ausführungsbeispiel gefällt beispielsweise die Melodie der jeweiligen Liedpassage dem Fahrzeuginsassen 3 nicht, sodass er den Gesang 5 einstellt.

Unter der die Gesangmerkmale 11 des Fahrzeuginsassen 3 zeigenden Box ist der Emotionszustand 12 eines anderen Fahrzeuginsassen 3 gezeigt. Der Emotionszustand 12 des anderen Fahrzeuginsassen 3 verbessert sich zu Beginn des Gesangs 5 und verschlechtert sich nach Beenden des Gesangs 5. Die Recheneinheit 4 kann hieraus ableiten, dass der andere Fahrzeuginsasse 3 gefallen an dem Gesang 5 findet.

Eine besonders bevorzugte Ausführungsform des erfindungsgemäßen Verfahrens sieht vor, dass in einem solchen Fall die Recheneinheit 4 das Abspielen weiterer Lieder im Fahrzeug 6 bewirkt, insbesondere solcher Lieder, die besonders viele Gesangauslösemerkmale 10.1 für den respektiven Fahrzeuginsassen 3 und besonders wenige Gesangunterbindungsmerkmale 10.2 umfassen. Würde hingegen der Gesang 5 Missfallen für den anderen Fahrzeuginsassen 3 auslösen, so könnte alternativ das Abspielen weiterer Lieder durch die Recheneinheit 4 unterbunden werden oder zumindest solche Lieder abgespielt werden, die besonders viele Gesangunterbindungsmerkmale 10.2 und/oder besonders wenige Gesangauslösemerkmale 10.1 umfassen, insbesondere frei sind von jeglichen Gesangauslösemerkmalen 10.1.

Mit Hilfe des erfindungsgemäßen Verfahrens wird die Nutzerinteraktion der Fahrzeuginsassen 3 mit dem Fahrzeug verbessert. So werden entsprechende Fahrzeugfunktionen automatisch in Abhängigkeit des Detektierens von Gesang 5 aktiviert, deaktiviert bzw. angesteuert. Insbesondere lässt sich die Fahrsicherheit verbessern, da in entsprechenden Situationen durch das Beenden des Gesangs 5 der Ablenkungsgrad der fahrzeugführenden Person verbessert werden kann.

Zur Durchführung des erfindungsgemäßen Verfahrens wird in der Recheneinheit 4 ein computerlesbares Speichermedium implementiert, auf dem ein entsprechendes Computerprogrammprodukt gespeichert ist, dessen Ausführung durch eine Ausführungseinheit der Recheneinheit 4 das Bereitstellen der erfindungsgemäßen Verfahrensschritte bewirkt. erfindungsgemäße Verfahren wird in einem Fahrzeug 6 durchgeführt.

## Patentansprüche

1. Verfahren zur Steuerung einer Fahrzeugfunktion, wobei mittels wenigstens eines Mikrofons (1) Geräusche im Fahrzeuginnenraum erfasst werden und/oder mittels wenigstens einer Kamera (2) zumindest das Gesicht wenigstens eines Fahrzeuginsassen (3) erfasst wird, wobei die Recheneinheit (4) von der Kamera (2) erzeugte Kamerabilder auf von einem Fahrzeuginsassen (3) vollführte Lippenbewegungen hin untersucht, wobei eine fahrzeuginterne Recheneinheit (4) von dem Mikrofon (1) und/oder der Kamera (2) generierte Sensordaten verarbeitet, um die Fahrzeugfunktion in Abhängigkeit von aus der Verarbeitung der Sensordaten gewonnener Informationen anzusteuern, und wobei
die Recheneinheit (4) vom Mikrofon (1) generierte Akustiksignale auf Gesang (5) wenigstens eines Fahrzeuginsassen (3) hin untersucht und/oder erkannte Lippenbewegungen mit bekannten Lippenbewegungsmustern abgleicht die beim Singen entstehen, und die Recheneinheit (4) die Fahrzeugfunktion ansteuert, wenn die Recheneinheit (4) das Singen wenigstens eines Fahrzeuginsassen (3) detektiert, und wobei
die Recheneinheit (4) Musikmerkmale (10) und Gesangmerkmale (11) erhebt, miteinander abgleicht und bei Übereinkunft wenigstens eines Merkmals das Mitsingen eines Fahrzeuginsassen (3) zu Musik bestimmt, wobei die Musik- und Gesangmerkmale (11) den Liedtext, den semantischen Inhalt eines Lieds und/oder die Harmonie, Melodie und/oder Rhythmus des Lieds umfassen, und wobei die Recheneinheit (4) die Musikmerkmale (10) aus den Akustiksignalen und/oder durch eine Analyse eines im Fahrzeug (6) wiedergegebenen Medieninhalts und die Gesangmerkmale (11) aus den Akustiksignalen und/oder dem Abgleich der erkannten Lippenbewegungen mit den Lippenbewegungsmustern ermittelt, **dadurch gekennzeichnet, dass**
die Recheneinheit (4) Musikmerkmale (10) bestimmt, welche das Singen durch einen Fahrzeuginsassen (3) auslösen oder das Singen durch einen Fahrzeuginsassen (3) unterbinden und diese in Form von Gesangauslösemerkmalen (10.1) und Gesangunterbindungsmerkmalen (10.2) in einer Triggerdatenbank (9) auf der Recheneinheit (4) und/oder einer fahrzeugexternen Recheneinrichtung (7) speichert.

2. Verfahren nach Anspruch 1,
**dadurch gekennzeichnet, dass**
die Recheneinheit (4) künstliche Intelligenz zur Detektion von Gesang (5) einsetzt.

3. Verfahren nach Anspruch 1 oder 2,
**dadurch gekennzeichnet, dass**
die Recheneinheit (4) die Kamerabilder und/oder von einem den Fahrzeuginnenraum erfassenden Sensor zur Erzeugung von Tiefeninformationen generierte Sensordaten zur Detektion von für Tanzen charakteristische Bewegungsmuster zumindest eines Fahrzeuginsassen (3) hin untersucht und feststellt, dass gerade im Fahrzeuginnenraum gesungen wird, solange die Recheneinheit (4) tanzende Bewegungen im Fahrzeuginnenraum erkennt.

4. Verfahren nach einem der Ansprüche 1 bis 3,
**dadurch gekennzeichnet, dass**
die Recheneinheit (4) übereinstimmende Paare aus Musikmerkmalen (10) und Gesangmerkmalen (11) an eine fahrzeugexterne Recheneinrichtung (7) überträgt, die Recheneinrichtung (7) die von einer Vielzahl von unterschiedlichen Recheneinheiten (4) bezogenen Paare in einer Übereinstimmungsdatenbank (8) aggregiert, die Recheneinrichtung (7) unter Verarbeitung der in der Übereinstimmungsdatenbank (8) aggregierten Paare die einem bestimmten Musikmerkmal (10) zugeordneten Lippenbewegungen gruppiert und zum Abrufen durch die Recheneinheiten (4) bereitstellt, wobei eine jeweilige Gruppierung von einer Recheneinheit (4) zum Auffinden einer Übereinkunft zwischen Musikmerkmalen (10) und Gesangmerkmalen (11) einsetzbar ist.

5. Verfahren nach Anspruch 4,
**dadurch gekennzeichnet, dass**
die Recheneinrichtung (7) einen Algorithmus des unüberwachten maschinellen Lernens zum Gruppieren von Lippenbewegungen einsetzt.

6. Verfahren nach einem der Ansprüche 1 bis 5,
**dadurch gekennzeichnet, dass**
die Recheneinheit (4), wenn sich wenigstens zwei Fahrzeuginsassen (3) im Fahrzeug (6) befinden, unter Verarbeitung von Sensordaten den Emotionszustand (12) der Fahrzeuginsassen (6) erfasst und den jeweiligen Emotionszustand (12) in Relation setzt zu detektiertem oder ausbleibendem Gesang (5).

7. Verfahren nach Anspruch 6,
**dadurch gekennzeichnet, dass**
die Recheneinheit (4):
- beim Detektieren einer Verbesserung des Emotionszustands (12) eines Fahrzeuginsassen (3) zu Beginn des Gesangs (5) und/oder beim Detektieren einer Verschlechterung des Emotionszustands (12) des Fahrzeuginsassen (3) am Ende des Gesangs (5) automatisch die Wiedergabe eines weiteren Lieds im Fahrzeug (6) bewirkt, insbesondere eines Lieds, welches wenigstens ein Gesangauslösemerkmal (10.1) umfasst; und/oder
- beim Detektieren einer Verschlechterung des Emotionszustands (12) eines Fahrzeuginsassen (3) zu Beginn des Gesangs (5) und/oder beim Detektieren einer Verbesserung des Emotionszustands (12) des Fahrzeuginsassen (3) am Ende des Gesangs (5) automatisch die Wiedergabe des aktuell im Fahrzeug (6) abgespielten Lieds beendet oder die Wiedergabe eines Lieds im Fahrzeug (6) bewirkt, welches wenigstens ein Gesangunterbindungsmerkmal (10.2) umfasst.

8. Verfahren nach Anspruch 7,
**dadurch gekennzeichnet, dass**
die Recheneinheit (4) für ein im Fahrzeug (6) wiederzugebendes Lied vor dessen Wiedergabe unter Zugriff auf die Triggerdatenbank (9) die jeweils im Lied enthaltenen Gesangauslösemerkmale (10.1) und Gesangunterbindungsmerkmale (10.2) bestimmt.

## Claims

1. Method for controlling a vehicle function, wherein sounds in a vehicle interior are captured by means of at least one microphone (1) and/or at least the face of at least one vehicle occupant (3) is captured by means of at least one camera (2), wherein the computing unit (4) examines camera images produced by the camera (2) for lip movements made by a vehicle occupant (3), wherein a vehicle-internal computing unit (4) processes sensor data generated by the microphone (1) and/or by the camera (2), in order to control the vehicle function based on information obtained from processing the sensor data, and wherein
the computing unit (4) examines acoustic signals generated by the microphone (1) for singing (5) of at least one vehicle occupant (3) and/or compares recognized lip movements with known lip movement patterns which arise during singing, and the computing unit (4) controls the vehicle function when the computing unit (4) detects singing of at least one vehicle occupant (3), and wherein
the computing unit (4) collects music features (10) and singing features (11), compares them with one another and, if at least one feature agrees, determines that a vehicle occupant (3) is singing along to music, wherein the music and singing features (11) comprise the lyrics, the semantic content of a song and/or the harmony, melody and/or rhythm of the song, and wherein the computing unit (4) ascertains the music features (10) from the acoustic signals and/or by analyzing media content played back in the vehicle (6) and ascertains the singing features (11) from the acoustic signals and/or by comparing the recognized lip movements with the lip movement patterns,
**characterized in that**
the computing unit (4) determines music features (10) which trigger singing by a vehicle occupant (3) or suppress singing by a vehicle occupant (3) and stores these music features in the form of singing trigger features (10.1) and singing suppression features (10.2) in a trigger database (9) on the computing unit (4) and/or on a vehicle-external computing device (7).

2. Method according to claim 1,
**characterized in that**
the computing unit (4) uses artificial intelligence to detect singing (5).

3. Method according to claim 1 or 2,
**characterized in that**
the computing unit (4) examines the camera images and/or sensor data generated by a sensor capturing the vehicle interior in order to produce depth information for detecting movement patterns characteristic of dancing of at least one vehicle occupant (3) and establishes that singing is taking place in the vehicle interior as long as the computing unit (4) recognizes dancing movements in the vehicle interior.

4. Method according to any of claims 1 to 3,
**characterized in that**
the computing unit (4) transmits matching pairs of music features (10) and singing features (11) to a vehicle-external computing device (7), the computing device (7) aggregates the pairs obtained from a plurality of different computing units (4) in a match database (8), the computing device (7), while processing the pairs aggregated in the match database (8), groups the lip movements assigned to a specific music feature (10) and makes them available for retrieval by the computing units (4), wherein a relevant grouping can be used by a computing unit (4) to find an agreement between music features (10) and singing features (11).

5. Method according to claim 4,
**characterized in that**
the computing device (7) uses an unsupervised machine learning algorithm to group lip movements.

6. Method according to any of claims 1 to 5,
**characterized in that**
when at least two vehicle occupants (3) are in the vehicle (6), the computing unit (4), while processing sensor data, captures the emotional state (12) of the vehicle occupants (6) and relates the relevant emotional state (12) to detected or absent singing (5).

7. Method according to claim 6,
**characterized in that**
a computing unit (4):
- upon detecting an improvement in the emotional state (12) of a vehicle occupant (3) at the beginning of singing (5) and/or upon detecting a deterioration in the emotional state (12) of the vehicle occupant (3) at the end of singing (5), automatically causes the playback of a further song in the vehicle (6), in particular a song which comprises at least one singing trigger feature (10.1); and/or
- upon detecting a deterioration in the emotional state (12) of a vehicle occupant (3) at the beginning of singing (5) and/or upon detecting an improvement in the emotional state (12) of the vehicle occupant (3) at the end of singing (5), automatically terminates the playback of the song currently playing in the vehicle (6) or causes the playback of a song in the vehicle (6) which song comprises at least one singing suppression feature (10.2).

8. Method according to claim 7,
**characterized in that**
for a song which is to be played back in the vehicle (6), the computing unit (4) determines, by accessing the trigger database (9), the singing trigger features (10.1) and the singing suppression features (10.2) contained in the song in each case before the song is played back.

## Revendications

1. Procédé de commande d'une fonction de véhicule, dans lequel par le biais d'au moins un microphone (1), des bruits dans l'habitacle de véhicule sont acquis et/ou par le biais d'au moins une caméra (2) au moins le visage d'au moins un occupant (3) de véhicule est acquis, dans lequel l'unité de calcul (4) examine des images de caméra produites par la caméra (2) à la recherche de mouvements de lèvres effectués par un occupant (3) de véhicule, dans lequel une unité de calcul (4) interne au véhicule traite des données de capteur générées par le microphone (1) et/ou la caméra (2) pour commander la fonction de véhicule en fonction d'informations obtenues à partir du traitement des données de capteur, et dans lequel
l'unité de calcul (4) examine des signaux acoustiques générés par le microphone (1) à la recherche d'un chant (5) d'au moins un occupant (3) de véhicule et/ou compare des mouvements de lèvres reconnus à des modèles de mouvements de lèvres connus qui se produisent lors du chant, et l'unité de calcul (4) commande la fonction de véhicule lorsque l'unité de calcul (4) détecte le chant d'au moins un occupant (3) de véhicule, et dans lequel
l'unité de calcul (4) relève des caractéristiques musicales (10) et des caractéristiques de chant (11), les compare entre elles et, en cas d'accord sur au moins une caractéristique, détermine le chant d'un occupant (3) de véhicule accompagnant la musique, dans lequel les caractéristiques musicales et de chant (11) comprennent les paroles de la chanson, le contenu sémantique d'une chanson et/ou l'harmonie, la mélodie et/ou le rythme de la chanson, et dans lequel l'unité de calcul (4) détermine les caractéristiques musicales (10) à partir des signaux acoustiques et/ou par une analyse d'un contenu médiatique reproduit dans le véhicule (6) et les caractéristiques de chant (11) à partir des signaux acoustiques et/ou de la comparaison des mouvements de lèvres reconnus avec les modèles de mouvements de lèvres,
**caractérisé en ce que**
l'unité de calcul (4) établit des caractéristiques musicales (10) qui déclenchent le chant par un occupant (3) de véhicule ou qui empêchent le chant par un occupant (3) de véhicule et les mémorise sous la forme de caractéristiques de déclenchement de chant (10.1) et de caractéristiques d'empêchement de chant (10.2) dans une base de données de déclenchement (9) sur l'unité de calcul (4) et/ou un dispositif de calcul (7) externe au véhicule.

2. Procédé selon la revendication 1,
**caractérisé en ce que**
l'unité de calcul (4) utilise une intelligence artificielle pour la détection du chant (5).

3. Procédé selon la revendication 1 ou 2,
**caractérisé en ce que**
l'unité de calcul (4) examine les images de caméra et/ou les données de capteur générées par un capteur détectant l'habitacle de véhicule pour produire des informations de profondeur permettant de détecter des modèles de mouvement caractéristiques de la danse d'au moins un occupant (3) de véhicule et constate que l'on chante justement dans l'habitacle de véhicule tant que l'unité de calcul (4) reconnaît des mouvements de danse dans l'habitacle de véhicule.

4. Procédé selon l'une des revendications 1 à 3,
**caractérisé en ce que**
l'unité de calcul (4) transmet des paires concordantes de caractéristiques musicales (10) et de caractéristiques de chant (11) à un dispositif de calcul (7) externe au véhicule, le dispositif de calcul (7) agrège les paires obtenues par une pluralité d'unités de calcul (4) différentes dans une base de données de concordance (8), le dispositif de calcul (7), en traitant les paires agrégées dans la base de données de concordance (8), regroupe les mouvements de lèvres associés à une caractéristique musicale (10) établie et les met à disposition pour être appelés par les unités de calcul (4), dans lequel un regroupement respectif peut être utilisé par une unité de calcul (4) pour trouver un accord entre des caractéristiques musicales (10) et des caractéristiques de chant (11).

5. Procédé selon la revendication 4,
**caractérisé en ce que**
le dispositif de calcul (7) utilise un algorithme d'apprentissage automatique non supervisé pour regrouper des mouvements de lèvres.

6. Procédé selon l'une des revendications 1 à 5,
**caractérisé en ce que**
l'unité de calcul (4), lorsqu'au moins deux occupants (3) de véhicule se trouvent dans le véhicule (6), acquiert l'état émotionnel (12) des occupants (6) de véhicule en traitant des données de capteurs et met en relation l'état émotionnel (12) respectif avec le chant (5) détecté ou absent.

7. Procédé selon la revendication 6,
**caractérisé en ce que**
l'unité de calcul (4) :
- lors de la détection d'une amélioration de l'état émotionnel (12) d'un occupant (3) de véhicule au début du chant (5) et/ou lors de la détection d'une détérioration de l'état émotionnel (12) de l'occupant (3) de véhicule à la fin du chant (5), provoque automatiquement la reproduction d'une autre chanson dans le véhicule (6), en particulier d'une chanson qui comprend au moins une caractéristique de déclenchement de chant (10.1) ; et/ou
- lors de la détection d'une détérioration de l'état émotionnel (12) d'un occupant (3) de véhicule au début du chant (5) et/ou lors de la détection d'une amélioration de l'état émotionnel (12) de l'occupant (3) de véhicule à la fin du chant (5), la reproduction de la chanson actuellement jouée dans le véhicule (6) est automatiquement interrompue ou la reproduction d'une chanson dans le véhicule (6) est provoquée, laquelle comprend au moins une caractéristique d'interruption de chant (10.2).

8. Procédé selon la revendication 7,
**caractérisé en ce que**
l'unité de calcul (4) établit pour une chanson à reproduire dans le véhicule (6), avant sa reproduction, en accédant à la base de données de déclenchement (9), les caractéristiques de déclenchement de chant (10.1) et les caractéristiques d'interruption de chant (10.2) respectivement contenues dans la chanson.
